Europäisches Patentamt

European Patent Office

Office européen des brevets

(11) Veröffentlichungsnummer: **0 280 953**
**A1**

(12) **EUROPÄISCHE PATENTANMELDUNG**

(21) Anmeldenummer: 88102210.7

(22) Anmeldetag: 15.02.88

(51) Int. Cl.⁴: **H04Q 11/04**

(30) Priorität: 02.03.87 DE 3706690

(43) Veröffentlichungstag der Anmeldung:
07.09.88 Patentblatt 88/36

(84) Benannte Vertragsstaaten:
**AT BE CH DE IT LI NL**

(71) Anmelder: **Siemens Aktiengesellschaft Berlin
und München
Wittelsbacherplatz 2
D-8000 München 2(DE)**

(72) Erfinder: **Finck, Herbert, Dipl.-Ing.
Stobäusstrasse 18
D-8190 Wolfratshausen(DE)**

(54) **Schaltungsanordnung zum Übertragen von Nachrichtensignalen zwischen Teilnehmereinrichtungen und einem Telekommunikationsnetz.**

(57) Die Schaltungsanordnung soll es ermöglichen, Teilnehmereinrichtungen mit einem geringen - schaltungstechnischen Aufwand an unterschiedliche, einem Telekommunikationsnetz zugehörige Übertragungsnetze anzuschließen.

Die Schaltungsanordnung weist eine Koppeleinrichtung (ERV) mit einer Vielzahl von für eine vorgegebene Übertragungskapazität ausgelegten Anschlußleitungen (L1 bis Lz) auf. An diese Anschlußleitungen ist je nach der für die einzelnen Teilnehmereinrichtungen benötigten Übertragungskapazität eine von der Übertragungskapazität der Anschlußleitungen abhängige Anzahl von Teilnehmereinrichtungen und/oder Übertragungskanälen der Übertragungsnetze anschließbar. Innerhalb der Koppeleinrichtung (ERV) ist eine Vielzahl von Durchschaltekanälen (KL11 bis K14n) vorgesehen, über die die Teilnehmereinrichtungen wahlfrei mit den für diese jeweils in Frage kommenden Übertragsnetzen verbindbar sind.

Die Schaltungsanordnung ist einsetzbar zum Anschließen von digitale Nachrichtensignale aufnehmenden und/oder abgebenden Teilnehmereinrichtungen an ein Telekommunikationsnetz, welches aus unterschiedlichen Übertragungsnetzen gebildet ist.

FIG 1

## Schaltungsanordnung zum Übertragen von Nachrichtensignalen zwischen Teilnehmereinrichtungen und einem Telekommunikationsnetz.

Die Erfindung betrifft eine Schaltungsanordnung zum Übertragen von digitalen Nachrichtensignalen mit unterschiedlichen Übertragungsprozeduren und/oder Übertragungsgeschwindigkeiten zwischen Teilnehmereinrichtungen und einem Telekommunikationsnetz, welches für die unterschiedlichen Übertragungsprozeduren ausgelegte Übertragungsnetze aufweist, denen jeweils mit mindestens einer Vermittlungsstelle verbundene Übertragungskanäle zugehörig sind.

Für die Text-und Datenkommunikation existieren bereits unterschiedliche öffentliche bzw. lediglich einem begrenzten Benutzerkreis zugängliche Übertragungsnetze. Hinsichtlich der in solchen Übertragungsnetzen für eine Nachrichtensignalübertragung benutzten Übertragungsprozeduren, unter welchen sowohl die Verfahren zur Einrichtung von der Nachrichtensignalübertragung dienenden Verbindungen als auch die Übertragungsverfahren bei bestehenden Verbindungen zu verstehen sind, kann beispielsweise unterschieden werden zwischen Durchschaltevermittlungsnetzen und Paketvermittlungsnetzen. Neben diesen sind in jüngster Zeit auch sogenannte Dienste integrierende digitale Übertragungsnetze (ISDN) bekanntgeworden, in welchen neben verschiedenen Text-und Datenkommunikationsarten auch Sprachübertragungen in digitaler Form möglich sind.

Für eine ökonomische Nutzung der genannten Übertragungsnetze wird seitens der Betreiber angestrebt, bereits vorhandende Verbindungswege und Netzbausteine für die unterschiedlichen Übertragungsnetze gemeinsam zu nutzen und geeignete Netzübergänge zu schaffen, d. h. die unterschiedlichen Übertragungsnetze in ein einheitliches Kommunikationsnetz anzubinden.

Es ist nun Aufgabe der vorliegenden Erfindung, einen Weg zu zeigen, wie bei einem unterschiedliche Übertragungsnetze einschließenden Telekommunikationsnetz die diesem zugehörigen Teilnehmereinrichtungen mit einem geringen - schaltungstechnischen Aufwand an die unterschiedlichen Übertragungsnetze anschließbar sind.

Gelöst wird die vorstehend genannte Aufgabe durch die im kennzeichnenden Teil des Patentanspruches 1 angegebenen schaltungstechnischen Merkmale.

Die Erfindung bringt den Vorteil mit sich, daß in Form der Koppeleinrichtung eine einheitliche Schnittstelle zu dem Telekommunikationsnetz geschaffen ist, die es ermöglicht, eine Vielzahl von Teilnehmereinrichtungen wahlfrei mit den unterschiedlichen Übertragungsnetzen eines diese umfassenden Telekommunikationsnetzes zu verbinden. Für die Steuerung dieser Schnittstelle ist in den einzelnen Übertragungsnetzen kein zusätzlicher Steuerungsaufwand erforderlich.

Vorteilhafte Ausgestaltungen der Erfindung ergeben sich aus den Unteransprüchen. Der Vorteil dieser Ausgestaltungen besteht einerseits in dem geringen schaltungstechnischen Aufwand für die Realisierung der Koppeleinrichtung. Andererseits besteht er darin, daß durch die Einstellung der Koppeleinrichtung und der ggfs. mit dieser verbundenen Multiplexanordnungen von einer Vermittlungsstelle des Telekommunikationsnetzes aus die Möglichkeit einer zentralen Koordinierung dieser Netzbausteine geschaffen ist. Durch eine solche zentrale Koordinierung ist es beispielsweise möglich, die Netzbausteine aufeinander abgestimmt an sich ändernde Verhältnisse innerhalb des Telekommunikationsnetzes anzupassen.

Im folgenden wird die Erfindung anhand von Zeichnungen näher erläutert.

FIG 1 zeigt ein Telekommunikationsnetz, bei dem die Erfindung angewandt ist und

FIG 2 zeigt ein Ausführungsbeispiel für den Aufbau der in FIG 1 dargestellten Koppeleinrichtung.

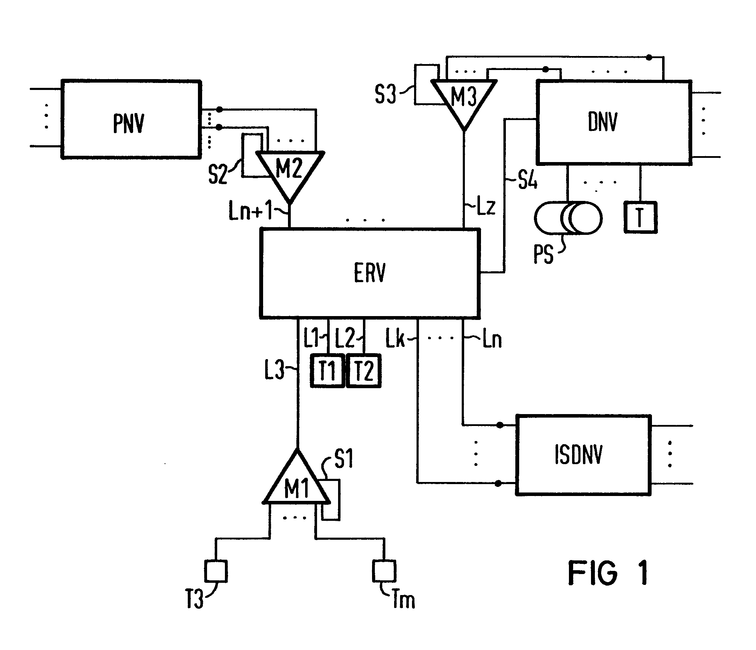

In FIG 1 ist ausschnittweise ein Telekommunikationsnetz dargestellt, welches aus einer Mehrzahl von unterschiedlichen Übertragungsnetzen gebildet ist. Bei diesen Übertragungsnetzen möge es sich beispielsweise um ein Durchschaltevermittlungsnetz, ein Paketvermittlungsnetz und um ein Dienste integrierendes Vermittlungsnetz (ISDN) mit jeweils mindestens einer Vermittlungsstelle handeln. Dabei mögen die zwei zuerst genannten Vermittlungsnetze für die Übertragung von Text-und/oder Datensignalen ausgelegt sein. Dagegen mögen innerhalb des Dienste integrierenden Vermittlungsnetzes digitale Nachrichtensignale für unterschiedliche Dienste der Sprach-, Text-und/oder Datenkommunikation übertragbar sein.

In FIG 1 ist für jedes der genannten Übertragungsnetze lediglich eine Vermittlungsstelle dargestellt, nämlich eine Durchschaltevermittlungsstelle DNV, eine Paketvermittlungsstelle PNV und eine ISDN-Vermittlungsstelle ISDNV. Jede dieser Vermittlungsstellen weist eine Vielzahl von Übertragungskanälen für die Aufnahme und/oder Abgabe von digitalen Nachrichtensignalen auf. Zumindest ein Teil dieser Übertragungskanäle steht dabei, wie im folgenden noch erläutert werden wird, über einen als Koppeleinrichtung dienenden Rangierverteiler ERV mit Teilnehmereinrichtungen in Verbindung. Dieser Rangierverteiler weist eine Vielzahl von mit L1 bis Lz bezeichneten Anschlußleitungen auf, die einheitlich für eine einer festgelegten Übertragungsgeschwindigkeit entsprechende Übertragungskapazität ausgelegt sein mögen. Im folgenden wird als Beispiel davon ausgegangen, daß sämtliche Anschlußleitungen für eine Übertragungsgeschwindigkeit von 64 kbit/s ausgelegt sind.

An die Anschlußleitungen L1 bis Lz des Rangierverteilers sind wahlweise für eine Übertragungsgeschwindigkeit von 64 kbit/s ausgelegte Teilnehmereinrichtungen und/oder Übertragungskanäle direkt oder Gruppen von Teilnehmereinrichtungen und/oder Übertragungskanälen, die für niedrigere Übertragungsgeschwindigkeiten ausgelegt sind, über jeweils eine Multiplexanordnung angeschlossen. Als Beispiel sind in FIG 1 an die Anschlußleitungen L1 und L2 Teilnehmereinrichtungen T1 und T2 sowie an die Anschlußleitungen Lk bis Ln 64kbit/s-Übertragungskanäle der ISDN-Vermittlungsstelle ISDNV direkt angeschlossen. Dagegen sind die Anschlußleitungen L3, Ln+1 und Lz jeweils durch eine Multiplexanordnung abgeschlossen. Die Multiplexanordnungen sind mit M1 bis M3 bezeichnet. Dabei ist die Multiplexanordnung M1 der Anschlußleitung L3, die Multiplexanordnung M2 der Anschlußleitung Ln+1 und die Multiplexanordnung M3 der Anschlußleitung Lz zugehörig. Diese Multiplexanordnungen ordnen den mit ihnen verbundenen Teilnehmereinrichtungen bzw. Übertragungskanälen entsprechend der für diese vorgesehenen Übertragungsgeschwindigkeit auf der zugehörigen Anschlußleitung jeweils mindestens einen Zeitkanal einer Mehrzahl von durch aufeinanderfolgende Multiplexrahmen festgelegten Zeitkanälen zu. Diese Zeitkanäle weisen jeweils zyklisch wiederholt in aufeinanderfolgenden Multiplexrahmen auftretende Zeitschlitze auf. Die Multiplexrahmen mögen dabei beispielsweise gemäß der CCITT-Empfehlung X.51 festgelegt sein.

An die Multiplexanordnung M1 ist eine Vielzahl von Teilnehmereinrichtungen T3 bis Tm angeschlossen. Bei diesen möge es sich beispielsweise um Einrichtungen handeln, die mit unterschiedlichen Übertragungsprozeduren und/oder Übertragungsgeschwindigkeiten, die beispielsweise im Bereich von 50 bit/s bis 9600 bit/s liegen mögen, digitale Nachrichtensignale aufnehmen und/oder abgeben und die entsprechend der jeweils für sie vorgesehenen Übertragungsprozedur einem der genannten Übertragungsnetze zugehörig sind. Beispiele für derartige Teilnehmereinrichtungen sind Bürofernschreibstationen, auch als Teletex-Stationen bezeichnet, welche im Zuge von über die Durchschaltevermittlungsstelle DNV verlaufenden Verbindungen Text-und/oder Datensignale mit einer Übertragungsgeschwindigkeit von beispielsweise 2400 bit/s aufnehmen bzw. abgeben. Als weitere Beispiele seien Teilnehmereinrichtungen genannt, die im Zuge von über die Paketvermittlungsstelle PNV verlaufenden virtuellen Verbindungen paketorientierte Text-und/oder Datensignale mit einer Übertragungsgeschwindigkeit von beispielsweise 1200 bit/s aufnehmen bzw. abgeben.

An die Multiplexanordnung M2 sind beispielsweise für eine Übertragungsgeschwindigkeit von 1200 bit/s ausgelegte Übertragungskanäle der Paketvermittlungsstelle PNV angeschlossen. Mit der Multiplexanordnung M3 mögen dagegen für eine Übertragungsgeschwindigkeit von 2400 bit/s ausgelegte Übertragungskanäle der Durchschaltevermittlungsstelle DNV verbunden sein.

Der genannte Rangierverteiler ERV, dessen Aufbau im folgenden noch näher erläutert werden wird, weist eine Vielzahl von Durchschaltekanälen auf, die wahlfrei miteinander verbindbar sind. Die für diese Durchschaltekanäle festgelegte Übertragungsgeschwindigkeit entspricht zumindest der niedrigsten, für die Übertragung von digitalen Nachrichtensignalen zu berücksichtigenden Übertragungsgeschwindigkeit. Dementsprechend ist den mit dem Rangierverteiler ERV verbundenen, für eine bestimmte Übertragungsgeschwindigkeit ausgelegten Teilnehmereinrichtungen bzw. Übertragungskanälen ein von dieser Übertragungsgeschwindigkeit abhängige Anzahl von Durchschaltekanälen zuordenbar.

Der Rangierverteiler ERV ist für das Einrichten der Verbindungen zwischen den einzelnen Durchschaltekanälen über einen in FIG 1 mit S4 bezeichneten Steuerkanal von einer der Vermittlungsstellen des Telekommunikationsnetzes her steuerbar. Bei der betreffenden Vermittlungsstelle möge es sich beispielsweise um die Durchschaltevermittlungsstelle DNV handeln. Von dieser aus sind über den Rangierverteiler auch die mit diesem verbundenen Multiplexanordnungen, d. h. hier die Multiplexanordnungen M1 bis M3, jeweils hinsichtlich der Zuordnung der Zeitkanäle auf der zugehörigen Anschlußleitung zu den mit dieser verbundenen Teilnehmereinrichtungen bzw. Übertragungskanälen einstellbar. Für diese Einstellung nehmen die Multiplexanordnungen jeweils über einen Steuereingang von der Vermittlungsstelle DNV abgegebene, über den Rangierverteiler ERV übertragene Einstellsignale auf. Die Steuereingänge sind in FIG 1 entsprechend der Numerierung der Multiplexanordnungen M1 bis M3 mit S1 bis S3 bezeichnet. Dem jeweiligen Steuereingang ist für die Aufnahme von Einstellsignalen über die zugehörige Multiplexanordnung zumindest ein als Steuerkanal dienender Zeitkanal auf der mit dieser verbundenen Anschlußleitung des Rangierverteilers zugeordnet.

Die für die Einstellung des Rangierverteilers ERV und der mit diesem verbundenen Multiplexeinrichtungen M1 bis M3 erforderlichen Einstellsignale sind in einer peripheren Speichereinrichtung PS der Durchschaltevermittlungsstelle DNV gespeichert. Bei dieser Speichereinrichtung kann es sich beispielsweise um einen Plattenspeicher handeln. Dieser Plattenspeicher kann für eine Abgabe der in ihm gespeicherten Einstellsignale beispielsweise von einer Bedienungseinrichtung T der Durchschaltevermittlungsstelle DNV angesteuert werden.

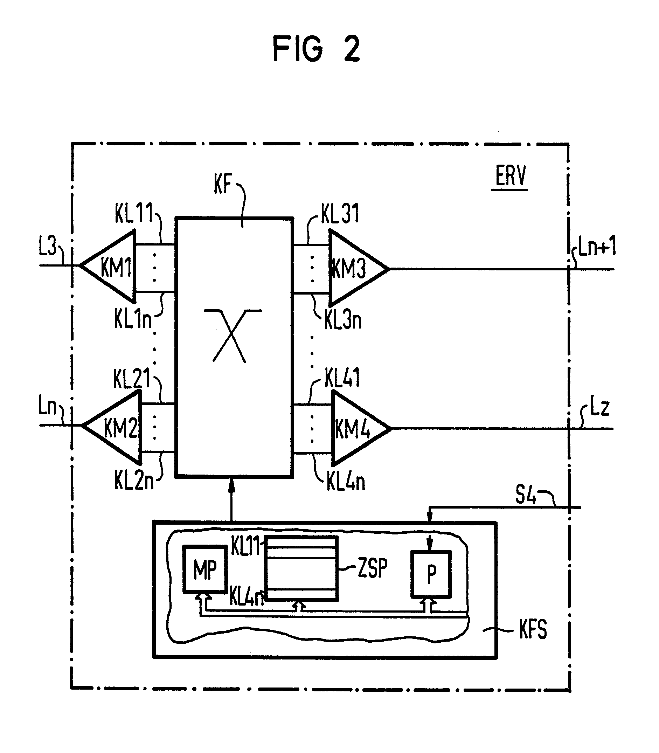

In FIG 2 ist ein Ausführungsbeispiel für den Rangierverteiler ERV dargestellt. Danach weist der Rangierverteiler für jede der mit ihm verbundenen Anschlußleitungen L1 bis Lz eine Multiplexanordnung auf. In FIG 2 sind vier dieser Multiplexanordnungen KM1 bis KM4, die mit den Anschlußleitungen L3, Ln, LN + 1 und Lz verbunden sind, dargestellt. Dabei ist die Multiplexanordnung KM1 der Anschlußleitung L3, die Multiplexanordnung KM2 der Anschlußleitung Ln, die Multiplexanordnung KM3 der Anschlußleitung Ln + 1 und die Multiplexanordnung KM4 der Anschlußleitung Lz zugehörig. Jede dieser Multiplexanordnungen weist eine Vielzahl von Durchschaltekanälen auf, deren Durchschaltekapazität der niedrigsten, für die Übertragung von digitalen Nachrichtensignalen zu berücksichtigenden Übertragungsgeschwindigkeit, die beispielsweise 50 bit/s betragen möge, entspricht. Diese Durchschaltekanäle sind entsprechend ihrer Zugehörigkeit zu den Multiplexern M1, M2 und M3 mit KL11 bis KL1n, KL21 bis KL2n, KL31 bis KL3n und KL41 bis KL4n bezeichnet.

Über die Multiplexanordnungen des Rangierverteilers sind die gerade genannten Durchschaltekanäle einzeln oder in einer Mehrzahl den mit der Anschlußleitungen L1 bis Lz direkt oder über Multiplexanordnungen M1 bis M3 verbundenen Teilnehmereinrichtungen bzw. Übertragungskanälen zugeordnet. Die Anzahl der Durchschaltekanäle, die den einzelnen Teilnehmereinrichtungen bzw. Übertragungskanälen zugeordnet ist, hängt dabei von der für diese festgelegten Übertragungsgeschwindigkeit ab. So sind beispielsweise der mit der Anschlußleitung L1 verbundenen Teilnehmereinrichtung T1 sämtliche Durchschaltekanäle der zugehörigen Multiplexanordnung zugeordnet. Dagegen sind beispielsweise die Durchschaltekanäle der Multiplexanordnung KM4 auf die mit der Anschlußleitung Lz verbundenen Übertragungskanäle der Durchschaltevermittlungsstelle DNV (FIG 1) entsprechend der für die einzelnen Übertragungskanäle vorgesehenen Übertragungsgeschwindigkeit aufgeteilt.

Sämtliche Durchschaltekanäle des Rangierverteilers ERV sind an ein in FIG 2 mit KF bezeichnetes Koppelfeld angeschlossen. Über dieses Koppelfeld sind die Durchschaltekanäle wahlfrei miteinander verbindbar. Damit ist es beispielsweise möglich, die den Teilnehmereinrichtungen T3 bis Tm (FIG 1) zugeordneten Durchschaltekanäle der Multiplexanordnung KM1 so mit Durchschaltekanälen der Multiplexanordnungen KM3 und KM4 zu verbinden, daß die betreffenden Teilnehmereinrichtungen über den Rangierverteiler mit Übertragungskanälen der Durchschaltevermittlungsstelle DNV bzw. der Paketvermittlungsstelle PNV in Verbindung stehen. In entsprechender Weise können die den Teilnehmereinrichtungen T1 und T2 jeweils zugeordneten Durchschaltekanäle mit Durchschaltekanälen verbunden werden, die Übertragungskanälen der ISDN-Vermittlungsstelle ISDNV zugeordnet sind. Mit Hilfe der Durchschaltekanäle des Rangierverteilers ERV und des diesem zugehörigen Koppelfeldes FS können also die auf den Anschlußleitungen L1 bis Lz (FIG1) auftretenden digitalen Nachrichtensignale nach Teilnehmereinrichtungen bzw. Übertragungskanälen sortiert und entsprechend der Übertragungsnetz-Zugehörigkeit der einzelnen Teilnehmereinrichtungen bzw. Übertragungskanäle neu zusammengefaßt über andere Anschlußleitungen wieder abgegeben werden. abei ist es von Vorteil, die digitalen Nachrichtensignale so neu zusammenzufassen, daß die für die Abgabe jeweils vorgesehene Anschlußleitung hinsichtlich ihrer Übertragungskapazität voll ausgenutzt ist.

Die erläuterte Einstellung des Koppelfeldes KF übernimmt eine Koppelfeldsteuerung KFS. Diese weist eine Mikroprozessoranordnung auf, die in FIG 2 ausschnittweise dargestellt ist. Dieser Mikroprozessoranordnung ist ein Mikroprozessor MP zugehörig, der über ein Busleitungssystem u. a. mit einem Zuordnungsspeicher ZSP verbunden ist. In diesem Zuordnungsspeicher ist jedem der Durchschaltekanäle (KL11 bis KL4n in FIG 2) des Rangierverteilers ERV ein Speicherbereich zugeordnet. In diesen Speicherbereichen sind jeweils Angaben bezüglich des mit dem jeweiligen Durchschaltekanal verbundenen Durchschaltekanals enthalten. Anhand dieser Angaben nimmt der Mikroprozessor MP die Einstellung des genannten Koppelfeldes KF vor.

Die in dem Zuordnungsspeicher gespeicherten Angaben werden von der Durchschaltevermittlungsstelle DNV her über den Steuerkanal S4 (FIG 1) in Form der bereits genannten Einstellsignale bereitgestellt. Mit diesem Steuerkanal ist ein Ein-/Ausgabebaustein P der Koppelfeldsteuerung verbunden. Die Einstellsignale werden über diesen Baustein aufgenommen und unter der Steuerung des Mikroprozessors MP in den Zuordnungsspeicher ZSP eingetragen.

## Ansprüche

1. Schaltungsanordnung zum Übertragen von digitalen Nachrichtensignalen mit unterschiedlichen Übertragungsprozeduren und/oder Übertragungsgeschwindigkeiten zwischen Teilnehmereinrichtungen (T1 bis Tn) und einem Telekommunikationsnetz, welches für die unterschiedlichen Übertragungsprozeduren ausgelegte Übertragungsnetze aufweist, denen jeweils mit mindestens einer Vermittlungsstelle verbundene Übertragungskanäle zugehörig sind,

dadurch gekennzeichnet, daß eine Koppeleinrichtung (ERV) mit einer Vielzahl von Anschlußleitungen (L1 bis Lz) vorgesehen ist, welche jeweils für eine Übertragungskapazität ausgelegt sind, die mindestens der höchsten der für die Aufnahme und/oder Abgabe von digitalen Nachrichtensignalen verwendeten Übertragungsgeschwindigkeiten entspricht,

daß mit jeder Anschlußleitung der Koppeleinrichtung Teilnehmereinrichtungen und/oder Übertragungskanäle in solcher Anzahl verbindbar sind, daß die für die Aufnahme und/oder Abgabe von digitalen Nachrichtensignalen durch diese Teilnehmereinrichtungen und/oder Übertragungskanäle insgesamt erforderliche Übertragungskapazität maximal gleich der vorgegebenen Übertragungskapazität ist,

und daß die Durchschaltung der auf jeder der Anschlußleitungen auftretenden digitalen Nachrichtensignale über eine Mehrzahl von wahlfrei nutzbaren Durchschaltekanälen in der Koppeleinrichtung erfolgt, deren Durchschaltekanäle jeweils eine Durchschaltekapazität aufweisen, welche zumindest der niedrigsten, für die Übertragung von digitalen Nachrichtensignalen zu berücksichtigenden Übertragungskapazität entspricht.

2. Schaltungsanordnung nach Anspruch 1, dadurch gekennzeichnet, daß die Koppeleinrichtung (ERV) für die ihr zugehörigen Anschlußleitungen (L1,...,Lz) jeweils eine Multiplexanordnung (KM1,...,KM4) mit einer Vielzahl von Durchschaltekanälen aufweist,

daß sämtliche Durchschaltekanäle (KL11,...,KLzn) der Koppeleinrichtung an ein von einer Steuereinrichtung (KFS) her steuerbares Koppelfeld (KF) angeschlossen sind und daß die Steuereinrichtung (KFS) für die Steuerung des Koppelfeldes einen Zuordnungsspeicher (ZSP) aufweist, in welchem für jeden der Durchschaltekanäle Angaben bezüglich des mit ihm verbundenen Durchschaltekanals gespeichert sind.

3. Schaltungsanordnung nach Anspruch 1 oder 2, dadurch gekennzeichnet, daß Teilnehmereinrichtungen bzw. Übertragungskanäle, welche für die Aufnahme und/oder Abgabe von digitalen Nachrichtensignalen eine gegenüber der Übertragungskapazität der Anschlußleitungen geringere Übertragungkapazität benötigen, an die Anschlußleitungen über Multiplexanordnungen (M1,...,M3) angeschlossen sind, welche den Teilnehmereinrichtungen und/oder Übertragungskanälen auf der jeweiligen Anschlußleitung entsprechend der benötigten Übertragungskapazität jeweils mindestens einen Zeitkanal mit zyklisch wiederholt in aufeinanderfolgenden Multiplexrahmen auftretenden Zeitschlitzen zuordnen.

4. Schaltungsanordnung nach den Ansprüchen 2 und 3, dadurch gekennzeichnet, daß von einer der Vermittlungsstellen (DNV) des Telekommunikationsnetzes aus durch Abgabe von Steuersignalen der Zuordnungsspeicher (ZSP) der Koppeleinrichtung (ERV) mit den genannten Angaben ladbar ist und die für den Anschluß von Teilnehmereinrichtungen bzw. Übertragungskanälen vorgesehenen Multiplexanordnungen hinsichtlich der Zuordnung zwischen Zeitkanälen und den Teilnehmereinrichtungen bzw. Übertragungskanälen einstellbar sind.

5. Schaltungsanordnung nach Anspruch 4, dadurch gekennzeichnet, daß für die Übertragung der Steuersignale auf den mit der Koppeleinrichtung (ERV) verbundenen Anschlußleitungen, welche für den Anschluß von Teilnehmereinrichtungen und/oder Übertragungskanälen mit einer Multiplexanordnung abgeschlossen sind, mindestens jeweils ein Zeitkanal benutzt ist.

FIG 1

PNV

DNV

T

PS

ISDNV

ERV

M1 · S1

M2 · S2

M3 · S3

S4

T1 · T2

T3

Tm

L1 · L2 · L3 · Lk · Ln · Ln+1 · Lz

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IEEE GLOBAL TELECOMMUNICATIONS CONFERENCE, Houston, Texas, 1.-4. Dezember 1986, Band 2, Paper 33.2, Seiten 1179-1184, IEEE, New York, US; J.F. MARSHALL et al.: "Automatic crossconnection equipment in British telecoms kilostream network" * Seite 1179, linke Spalte, Zeile 10 - rechte Spalte, Zeile 6, Zeile 10 - Seite 1182, linke Spalte, Zeile 22 * --- | 1,2,4,5 | H 04 Q 11/04 |
| A | IEEE GLOBAL TELECOMMUNICATIONS CONFERENCE, Houston, Texas, 1.-4. Dezember 1986, Band 2, Paper 33.3, Seiten 1185-1189, IEEE, New York, US; A. AVENEAU et al.: "A versatile data multiplexer and cross-connector N*64/2048 kbit/s: BMX 264" * Seite 1185, rechte Spalte, Zeile 19 - Seite 1189, linke Spalte, Zeile 2 * --- | 1,2,4,5 | |
| A | IEEE GLOBAL TELECOMMUNICATIONS CONFERENCE, Houston, Texas, 1.-4. Dezember 1986, Band 2, Paper 33.1, Seiten 1174-1178, IEEE, New York, US; I. TOKIZAWA et al.: "Large capacity non-blocking digital cross-connect system using high speed optical links" * Seiten 1175-1178, Abschnitte III,IV * --- | 1,2 | RECHERCHIERTE SACHGEBIETE (Int. Cl.4)<br><br>H 04 Q |
| A | PROCEEDINGS OF THE NATIONAL COMMUNICATIONS FORUM, Rosemont, Illinois, 7.-9. Oktober 1985, Band 33, Seiten 284-288; K.J. HOHHOF: "Digital crossconnect systems" * Seite 287, linke Spalte, Zeile 26 - rechte Spalte, Zeile 14 * ---     -/- | 1,2 | |

Der vorliegende Recherchenbericht wurde für alle Patentansprüche erstellt

| Recherchenort | Abschlußdatum der Recherche | Prüfer |
|---|---|---|
| DEN HAAG | 25-05-1988 | DE MUYT H.A. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

**EUROPÄISCHER RECHERCHENBERICHT**

Europä.. hes
Patent.. t

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IEEE INTERNATIONAL CONFERENCE ON COMMUNICATIONS, Amsterdam, 14.-17. Mai 1984, Band 2, Seiten 695-698, IEEE, New York, US; W.J. GIGUERE: "Digital access and cross-connect system (DACS): a remotely configurable digital transmission system" * Insgesamt * --- | 1,2 | |
| A | INTERNATIONAL SWITCHING SYMPOSIUM, Paris, 7.-11. Mai 1979, Paper 20B4, Seiten 253-259; A. TEXIER et al.: "TDM distribution equipment for data links" * Seiten 254,255, Abschnitte I.2,I.3: Seiten 255-258, Abschnitt II * --- | 1 | |
| A | JAPAN TELECOMMUNICATIONS REVIEW, Band 28, Nr. 3, Juli 1986, Seiten 172-180, Tokyo, JP; N. TERADA: "6,312 kbit/s synchronous multiplexer with cross-connect function" * Insgesamt * ----- | 1 | RECHERCHIERTE SACHGEBIETE (Int. Cl.4) |

Der vorliegende Recherchenbericht wurde für alle Patentansprüche erstellt

| Recherchenort | Abschlußdatum der Recherche | Prüfer |
|---|---|---|
| DEN HAAG | 25-05-1988 | DE MUYT H.A. |

EPO FORM 1503 03.82 (P0403)